# EUROPEAN PATENT APPLICATION

(11) **EP 1 724 140 A2**
(43) Date of publication of application: **22.11.2006**
(21) Application number: 06113919.2
(22) Date of filing: 15.05.2006
(51) Int. Cl.: B60J 7/08

(54) **Covering equipment for the covering of the upper part of lorry bodies, containers or the like**

(30) Priority: 16.05.2005 IT VR20050061
(71) Applicant: O.EMME.A. S.r.l., 37036 San Martino Buon Albergo VR (IT)
(72) Inventor: Andriolo, Francesco, 37036 San Martino Buon Albergo (VR) (IT); Asnicar, Antonio, 37030 Cazzano Di Tramigna (VR) (IT)
(74) Representative: Fisauli, Beatrice A. M.

(57) **Abstract**

A covering equipment is proposed to cover the upper part of lorry bodies and/or containers in an easy, rapid and safe way since the upper part of said lorry bodies and/or containers usually is open. The proposed covering equipment (1) comprises a rolling device (2) which rolls up or unrolls a sheet (3) on the open part of the lorry bodies and/or containers. The rolling device (2) is positioned on an extendible frame (4).

## Description

The present invention refers to a covering equipment for the covering of the upper open part of lorry or truck bodies, containers or the like, which are mounted on trucks, lorries and/or trailers and are transported or trailed by trucks or suitable tractors.

The covering equipment according to the present invention permits to cover the upper part (which usually is open) of lorry bodies and/or containers with a suitable sheet in an easy, rapid and safe way. In this way, the material to be transported is covered and protected and there is no risk for the material of falling down from the truck, the safety rules provided for by the law being thus complied with.

As is known, the good practice and the safety provisions of the law as regards the transport of loose materials in containers or bodies of trucks or lorries require a hermetic covering of the loose materials with large sheets in order to prevent the loose materials to be scattered on the paving or road. Besides, it is necessary to assure that the contents of the container, especially in case of waste, be not contaminated by external agents such as rain or other.

In the conventional covering systems, the bodies or containers are covered by putting a sheet or cloth on the whole upper part or surface of the container. A part of the sheet overlaps the side boards of the truck body or container where the sheet is hooked to make the cover stable and safe during the drive. All the so-described operations are usually accomplished by at least two operators. For the sake of practicalness, an operator must be at least at the maximum height of the side boards of the truck body, which is very dangerous. There is a serious risk of accidents and especially falls of the operator.

In order to solve the above problems, in particular the problems connected with the safety of the operators, many solutions were found to cover, manually or in an automated way, the upper surface of the truck bodies or containers.

For instance, the prior art discloses covering systems in which the cloth or sheet to be put on the upper part of the truck body or container is anchored on a long side board of the body or container and is fixed to a movable upright which is as long as the long side board of the truck body. Said upright is moved by means of pneumatic systems disposed on the short side boards of the truck body.

However, said covering systems are not very effective since the movement of the upright and the consequent movement of the sheet do not adapt to a possible bad arrangement of the material loaded inside the truck body or container. It is, therefore, possible that the bad arrangement of the material causes a jam of both the upright and the sheet.

Alternately, the prior art discloses apparatuses in which a system of levers permits the sheet to be rolled up on a side after freeing the opposite side.

However, said apparatuses give rise to functional problems since these systems are complex and are provided with operative pneumatic and hydraulic components cooperating with electromotors. As a consequence of this, there are obvious problems as concerns the installation and the costs, in addition to the problems connected with the non-securing of the sheet once stretched, an insufficient and bad arrangement of the sheet during the rolling up phase, the non-automated movement of the sheet and other.

All the above-described problems and drawbacks are solved according to the present invention through a covering apparatus for the covering of truck bodies or containers, characterized in that it comprises a sheet which may be rolled up with a rolling device to which the sheet is fixed on a side, said rolling device being positioned in the front part of the truck body or container, said sheet being longitudinally subdivided into at least three parts folded in the rolling up phase and unfolded in the covering phase, the sheet side opposite to the one fixed to the rolling device comprising at least a rope permitting the operator to facilitate the unrolling and rolling up phases of the rolling device.

Advantageously, the so-described equipment permits to accomplish the covering operations by an only operator safely as it is not necessary for an operator to go up the truck body or container and to remain near the side board. In this way, high risks are avoided for the operator.

The device according to the present invention makes the sheet rolling and unrolling operations easy and rapid since the rolling device is actuated by means of a remote control and therefore, the operator can control the rolling device even when he is behind the truck body or container to facilitate the unrolling or rolling up of the sheet by means of ropes.

Further characteristics and features of the present invention will be better understood from the following specification which is provided as a non limiting example on the hand of the accompanying drawings wherein:
Figure 1 is a schematic lateral view of the covering apparatus according to the present invention, in the phase of utilization, mounted on a motor-lorry or truck;
Figure 2 is a schematic lateral view of the covering apparatus in the phase of non utilization while the body or container is mounted on the articulated lorry;
Figure 3 is a view of a hook element utilized by the operator to better arrange the sheet on the lorry body or container;
Figures 4, 5 are a front view and a lateral view of the present apparatus, respectively, the supports being extended in height;
Figure 6 is a top view of the sheet stretched on the body of the articulated lorry;
Figures 7, 8 are front views of the inside of the rolling device;
Figure 9 is a sectional top view of the guides permitting the rolling device to be lifted to the necessary heights;
Figures 10, 11 are a front view and a lateral view of the sheet guiding element disposed on the rolling element, respectively.

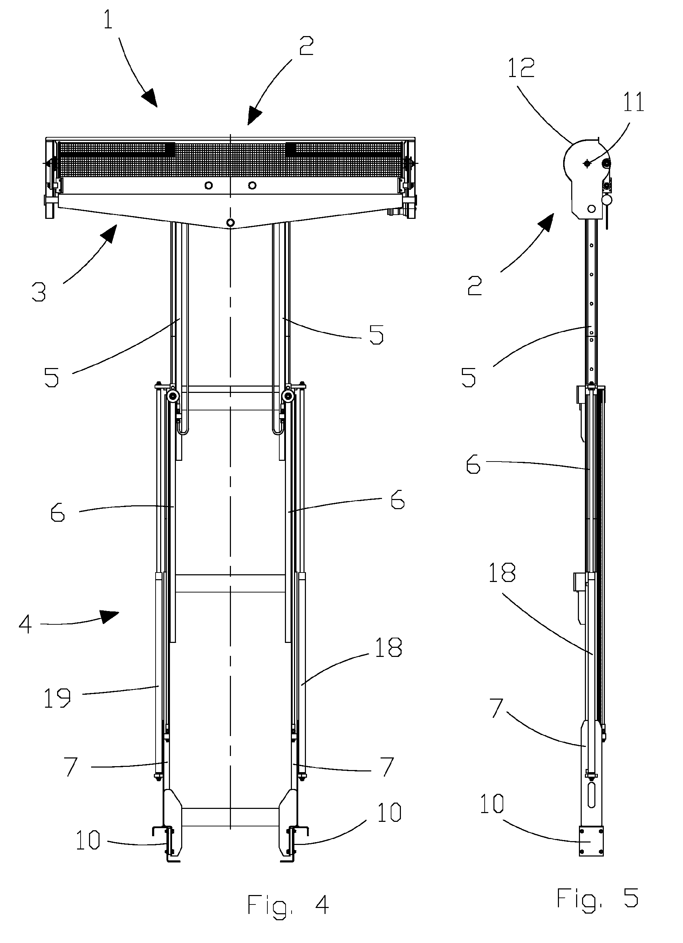

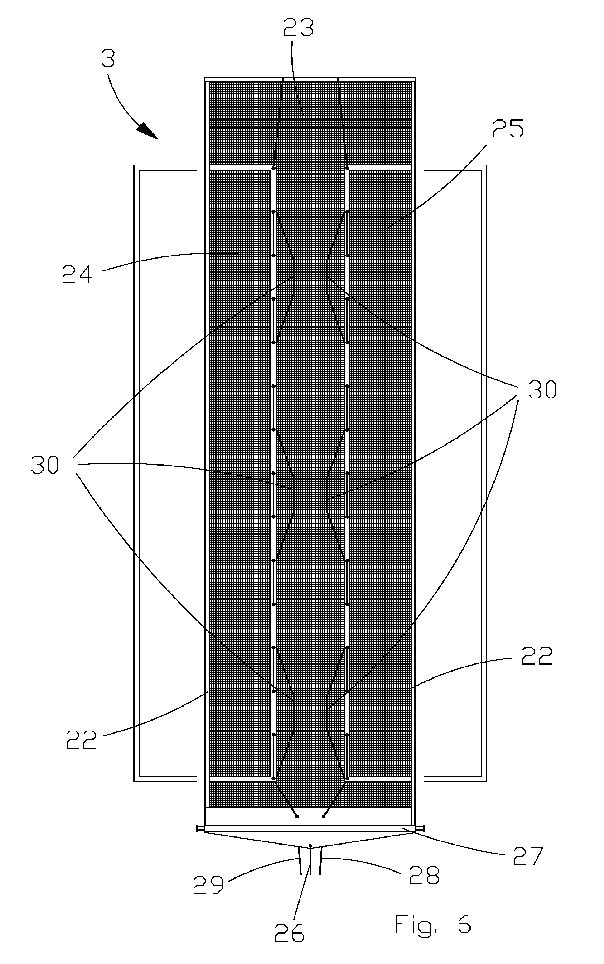

With reference to the accompanying drawings, number 1 denotes a covering apparatus according to the present invention. The covering apparatus 1 comprises a rolling element 2 which extends and rolls up a covering sheet 3 which is positioned on a frame 4 which is adjustable for height as it can be seen in Figures 4, 5.

Said frame 4 comprises three parts which move in relation to one another through two guides 5, 6 and two hydraulic pistons 18, 19 which are disposed laterally to the extractable structure and permit to lift the rolling element 2 in a balanced way. The rolling element 2 is actuated through an oil-hydraulic engine 20 which is equipped with a chain transmission 21. The oil reaches the engine through flexible hoses which are guided and convoyed in a suitable way.

The frame 4 is fixed to the vehicle through suitable plates 10 which are welded to the frame 9 of the vehicle itself. Said frame 4 is bolted on said plates 10.

The present invention permits the rolling up and extension of the sheet 3 safely and in good order. The sheet 3 has suitable dimensions in respect to the lorry body or container to be covered. In addition, the sheet 3 is subdivided into three parts 23, 24, 25 by means of two guide ropes 22. This division is necessary to cover also the side boards of the lorry body or container. The sheet border opposite to the border fixed to the rolling element 2 is provided with a transverse bar 27 to which a pulling rope 26 is fixed. The pulling rope 26 permits the operator to extend the sheet 3 on the body or container 8. At the same time, the borders of the lateral parts 24, 25 of the sheet 3 are provided with edge tightning strings 28, 29 which in the extending and rolling phases are subjected to a light tension because said edge tightning strings 28, 29 are connected to a string 26 and form an only element to be stretched.

In the covering phase, the rear part of the sheet including the transverse bar 27 is fixed to the rear board with suitable coupling means such as elastic ropes.

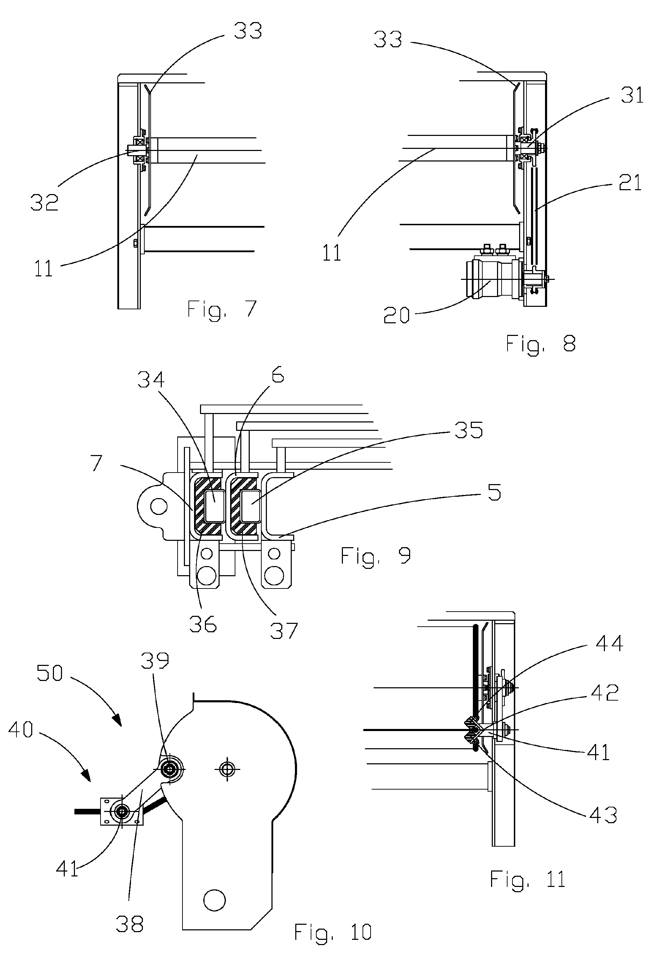

As it can be seen in Figures 7, 8, the rolling element or device 2 comprises a drum 11 on which the sheet 3 is rolled up. The drum 11 is a hollow axle an end of which is supported by an axially rigid, self-aligning bearing support 31 while on the opposite end, another support 32 is positioned in such a way as to be free to axially slide to compensate for expansions and processing defects.

The oil-hydraulic engine 20 permits the rotation in both directions of the axle of the sheet rolling up drum 11 through a chain transmission 21 in order to minimize the lateral dimensions. Besides, the engine 20 can hold the sheet 3 in any wished position.

The drum 11 is covered by a protection 12, which is put in the front of the rolling element 2 and up-wind in respect to the direction of travel of the vehicle. In addition, the drum 11 is equipped with two discs 33 which are dull in the external surface. The two discs 33 permit the sheet to be conveyed in a regular manner onto the rolling drum itself.

As it can be seen in Figure 9, the structure of the frame 4 comprises a structural C-shape 7, which is fixed to the frame of the vehicle 9, a first C-guide 6 and a second C-guide 5. A rectangular tube 34 is welded to the first C-shape 6. Likewise, a second tube 35 is welded to the first C-shape 5. Said tubes 34, 35 slide with precision inside the adjacent structural C-shapes, namely, the structural shape 7 and the structural shape 6, respectively, thanks to the application of a synthetic antifriction material 36, 37 which is fixed to the tubes 34, 35 and slides inside said structural shapes 7, 6, respectively. This type of structure guarantees an absence of vibrations during the travel of the vehicle as well as a good resistance to flexure and torsion.

For a correct use of the rolling element 2, a guide system 50 is connected to the rolling element 2 to guide two guide ropes 22. Said guide system 50 as detailed in Figures 10, 11 comprises a slide holder 40 which includes slides and is connected through a short arm 38 with the rolling element 2; in particular, the short arm 38 is free to move since it is connected through a journal 39 with the rolling unit. The slide holder 40 is connected through a journal 41 with the short arm.

The slide holder 40 includes an angle bar 42 which is integral with the loose journal 41. Two slides 43, 44 are fixed in opposite positions to the angle bar by means of screws. The two slides are made of an antifriction material and have a longitudinal extension, the axis of longer extension being disposed in the sense of running of the sheet 3.

The guide rope 22 is inserted in the interspace of the two slides 43, 44 so that when the guide rope 22 rolls the sheet 3 around the guide rope itself with the lateral edges 24, 25, in the rolling phases the lateral edges run in the sector included between the slides of the two ends.

The structure of the guide system 50 permits the guide ropes 22 all the degrees of freedom that are necessary for a free running of the sheet 3. The same conformation of the connection that connects the slide holder 40 with the rolling element 2 permits the slides 43, 44 of the guide ropes 22 to assume any position that supports the running of the sheet. In addition, a correct positioning, which could be also adjustable, of the slides 43, 44 on the angle bar 42 guarantee a regular running of the sheet.

The dimensions of the guide system 50 are such that an easy movement of the sheet is permitted in the rolling and unfolding phases; in particular, the weight of the slide holder 40 and the length of the short arm 38 are such that they facilitate the work of the operator.

Besides, it is to be noted that the covering device 1 according to the present invention is controlled by a suitable oil-hydraulic control which is actuated by an electromotor which is fed by the battery of the vehicle or by a dedicated endothermic motor. Instead of the oil-hydraulic system it is also possible to use compressed air.

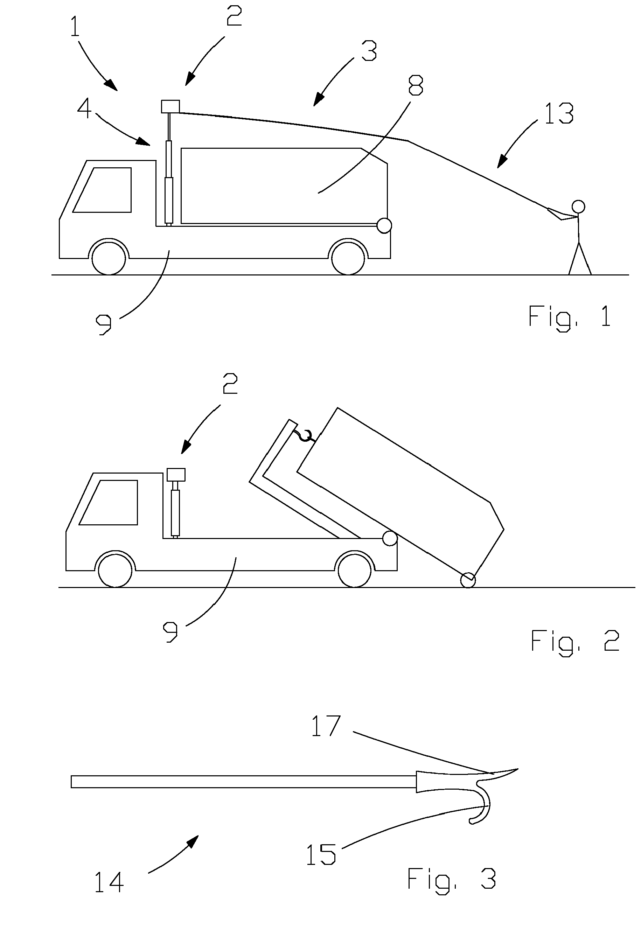

Now, the use of a covering device according to the present invention is described as follows: As it appears from Figure 1, in the unrolling phase in which the sheet 3 is unrolled the operator is behind the motor-lorry body. In these initial operations, the rolling device 2 is brought to its maximum height so that the operator is able to easily position the sheet 3 on the lorry body 8, for instance by means of ropes 13; as a matter of fact, the sheet 3 is indeed too heavy to be unrolled by the operator from the rolling device 2 directly.

In the present invention, the operator puts the cylinders 18, 19 into motion by using a radio control so that the rolling device reaches the wished height. Then, the operator operates the rolling device 2 by using the same radio control so that the rolling device unrolls the sheet 3 to the wished extension. The ropes 13 permit the operator to guide the sheet. Initially, the ropes are recovered by the rolling device 2. To this end, the operator can use a suitable hook 17, disposed on a bar 14, as it can be seen in Figure 3. In order to facilitate the positioning and utilization of the ropes, the ropes 13 are provided with a self-winding device, which permits to avoid losses of time whenever it is necessary to wind or unwind the ropes.

When the sheet 3 is completely unrolled and extended on the truck body 8, the operator lowers the rolling device 2 to the wished height. Then, the operator arranges the lateral edges 24, 25 on the side boards of the truck body 8 easily by utilizing longitudinal elastic ropes 30. The operator remains down the lorry and utilizes the hook 17 of the bar 14 to reach the elastic ropes 30. The longitudinal elastic ropes 30 are fixed laterally to the side boards through suitable hooking elements. The rear edge that corresponds to the transverse bar is fixed to the rear board.

In the rolling phase, the operator puts the lateral edges 24, 25 on the central part 23 of the sheet by pulling the ropes 28, 29 connected with the central rope 26. In this way, after the operator has simply positioned the rear parts of the lateral edges 24, 25 on the lorry body, the operator must only extend the ropes and put the rolling device into motion.

The covering apparatus 1 permits to minimize the dimensions behind the cab of the driver of the motor-lorry, especially in case of the presence of containers to be removed from the motor-lorry. Said containers are coupled through a central hook as represented in Figure 2. In fact, the presence of two guides 5, 6 and lateral cylinders 18, 19 permits to let the central sector free for the lifting hook for the container.

A skilled artisan can conceive changes or versions to be considered as included in the scope of protection of the present invention.

## Claims

1. Covering apparatus (1) for the covering of truck bodies (8) or containers, **characterized in that** it comprises a sheet (3) which may be rolled up with a rolling device (2) to which said sheet (3) is fixed on a side, said rolling device (2) being positioned in the front part of the truck body (8) or container through at least a connecting element (4) comprising at least two supports (7), said sheet (3) being longitudinally subdivided into at least three parts (23, 24, 25) folded in the rolling up phase and unfolded in the covering phase, the sheet side opposite to the one fixed to the rolling device (2) comprising at least a rope (3) permitting the operator to facilitate the unfolding and rolling up phases of the rolling device (2).

2. Covering apparatus (1) as claimed in the foregoing claim, **characterized in that** said connecting element is a frame (4) comprising at least two elements (5, 6, 7) of which the former (7) is fixed to the lorry or trailer by means of connecting elements (10), the latter (5, 6) is extendible in respect to the former (7) by means of at least a hydraulic piston (18, 19) and is connected with the rolling device (2).

3. Covering apparatus (1) as claimed in the foregoing claims, **characterized in that** said sheet (3) is subdivided in at least three parts (23, 24, 25) by two guide ropes (22) so that when the sheet (3) is unfolded, the sheet (3) covers the side boards of the lorry body at least partially.

4. Covering apparatus (1) as claimed in the foregoing claims,
**characterized in that** in the rolling phase or stretching phase the lateral parts (24, 25) of the sheet (3) overlap the central part (23).

5. Covering apparatus (1) as claimed in the foregoing claims, **characterized in that** the rolling device (2) is connected with a guide system (50) comprising a slide holder (40) in which sheet guide ropes (22) slide; said slide holder (40) is connected through a first journal (41) with a short arm (38) which in turn is connected with the rolling device (2) on a second journal (39) so that the sheet (3) can be rolled up on the drum (11) in a good order.

6. Covering apparatus (1) as claimed in the foregoing claims, **characterized in that** said slide holder (40) comprises an angle bar (42) to which at least two slides (43, 44) are fixed in opposite positions; the guide rope (22) can slide in the interspace of said slides (43, 44) so that in the rolling phase, the lateral parts (24, 25) of the sheet (3) are collected by said slides (43, 44).

7. Covering apparatus (1) as claimed in the foregoing claims, **characterized in that** the side of the sheet (3) that is opposite to the side connected with the rolling device comprises at least a transverse bar (27) connected with at least a drawing rope (26); the free ends of the lateral parts (24, 25) of said sheet (3) comprise edge stretching ropes (28, 29) which are connected with the rope (26) to form an only element to be stretched.

8. Covering apparatus (1) as claimed in the foregoing claims, **characterized in that** in the rolling phase, said lateral parts (24, 25) are positioned on the central part (23) of the sheet (3) by stretching the rope (13) comprising the edge stretching rope (28, 29).

9. Covering apparatus (1) as claimed in the foregoing claims, **characterized in that** the rolling device (2) comprises a sheet rolling drum (11) supported at one end by an axially rigid, self-aligning bearing support (31) while on the opposite end, another support (32) is positioned in such a way as to be free to axially slide.

10. Covering apparatus (1) as claimed in the foregoing claims, **characterized in that** said rolling device is actuated in both rotation directions by an engine (20) which holds the sheet (3) in any wished position.

11. Covering apparatus (1) as claimed in the foregoing claims, **characterized in that** said engine (20) is an oil-hydraulic engine.

12. Covering apparatus (1) as claimed in the foregoing claims, **characterized in that** said oil-hydraulic engine (20) permits the drum (11) to rotate through a chain transmission (21).

13. Covering apparatus (1) as claimed in the foregoing claims, **characterized in that** said drum (11) covered by a protecting element (12) comprises at least a disc (33) which conveys the sheet (3) onto the drum (11) itself in a good order.

14. Covering apparatus (1) as claimed in the foregoing claims, **characterized in that** said frame (4) comprises a first structural shape (7), shaped like a "C" and fixed to the lorry or trailer, in the inside of which a synthetic antifriction material (36) slides; the synthetic antifriction material (36) is integral to a tube (34) which is connected with a second structural shape (6) which is connected with the rolling device (2) through connecting means (5, 35).

15. Covering apparatus (1) as claimed in the foregoing claims, **characterized in that** in the second structural shape (6), shaped like a "C", a synthetic antifriction material (37) slides and is integral to a tube (35) connected with a third structural shape (5) connected with the rolling device (2).

16. Covering apparatus (1) as claimed in the foregoing claims, **characterized in that** it is controlled by an oil-hydraulic central control equipped with an electric motor actuated by a battery of the vehicle on which the covering apparatus is positioned or by a dedicated endothermic engine.
